Europäisches Patentamt

European Patent Office

Office européen des brevets

(19)

(11) Publication number: **0 404 174**

**A1**

# EUROPEAN PATENT APPLICATION

(21) Application number: **90111874.5**

(22) Date of filing: **22.06.90**

(51) Int. Cl.5: **H02P 1/42, H02P 7/638**

(30) Priority: **22.06.89 YU 1283/89**

(43) Date of publication of application:
**27.12.90 Bulletin 90/52**

(84) Designated Contracting States:
**AT BE CH DE DK ES FR GB GR IT LI LU NL SE**

(71) Applicant: **Vinko, Rogina**
**Cvijete Zuzoric 1**
**Zagreb(YU)**

(72) Inventor: **Vinko, Rogina**
**Cvijete Zuzoric 1**
**Zagreb(YU)**

(74) Representative: **Bauer, Robert, Dipl.-Ing. et al**
**Boeters & Bauer Patentanwälte**
**Bereiteranger 15**
**D-8000 München 90(DE)**

(54) **Circuit for reducing power consumption and improving perfomance of an asynchronous electric motor.**

(57) A circuit for reduction of energy consumption and improved performance of single- and three-phase asynchronous motors is provided in the form of a merely electronic circuit varying in design dependent on its purpose. With a single-phase asynchronous motor it is used to increase the secondary starting torque, to actuate a starting switch by auxiliary phase inductivity, to reduce energy consumption as compared with the typical conventional consumption, and to increase the starting torque during motor startup without the requirement of a centrifugal starting switch. With a three-phase asynchronous motor the circuit of the invention achieves a reduction of energy consumption as compared with the typical

conventional consumption.

The respective circuit includes an oscillating assembly consisting of a triac (T1), a diac (D1), a capacitor (C1) and a resistor (R1), to which other electronic elements may be added. The energy consumption reduction as compared with the typical conventional consumption of single- and three-phase asynchronous motors is effected by reduction of reactive motor currents thus to establish more natural operation conditions for the motor. As a byproduct, an increase of the starting torque during startup is obtained at lower energy consumption from the grid.

Fig. 1

EP 0 404 174 A1

# Circuit for reducing power consumption and improving performance of an asynchronous electric motor

This invention concerns a circuit for reducing power consumption and improving performance of an asynchronous electric motor.

Since the beginning of application of single- and three-phase asynchronous motors in industry there were attempts to improve their energy consumption. However, the improvement in energy consumption was most often accompanied by a decrease in motor starting torque and/or deterioration of some other motor characteristics. Very low effects have been achieved by reducing the active and reactive current in motor operation in order to reduce total motor engergy consumption. An improvement of motor startup and starting torque was usually achieved by using a star-delta shifting where a centrifugal starting switch would change from star to delta operation when the rotor has reached a particular speed.

The invention as claimed is intended to provide a reduced power consumption and still improve performance of the motor. It employs an auxiliary phase inductivity to actuate a semiconductor circuit breaker as e.g. a star-delta switch through generation of oscillations by a pulse-actuated tuned circuit. The invention thus achieves a reduction of energy consumption through reduction of active and reactive power and peak load with single- as well as three-phase asynchronous motors whereby, in the case of a single-phase motor, an in crease is also obtained of the secondary starting torque.

In other words: The circuit in accordance with the present invention provides the generation of a starting torque or, increased starting torque without the shortcomings of using a centrifugal starting switch by enabling an auxiliary phase inductivity to actuate a non contact switch by means of oscillations without the need of an operational amplifier.

The publication EP-A2-0 291 085 of the same applicant and inventor concerning an "Impulse control of lighting, motor r.p.m., vibrational tape drive, and grid disturbance trip at reduced power consumption" discloses the use of triac, diac, capacitor and variable resistor elements to which other means may be added. The present invention likewise provides circuitry employing triac, diac, capacitor and resistor elements to achieve the aforementioned object.

In the following some preferred embodiments of the present invention will be described in detail, taking reference to the accompanying drawings in which

Fig. 1 shows a circuit in accordance with the invention for operating a single-phase asynchronous motor with increased secondary starting torque;

Fig. 2 shows a circuit in accordance with the invention for a single-phase asynchronous motor where a switch is actuated by an auxiliary phase inductivity;

Fig. 3 shows a circuit in accordance with the invention for a single-phase asynchronous motor where the secondary starting torque is increased and, at the same time, a switch is acutated by an auxiliary phase inductivity;

Fig. 4 shows a circuit in accordance with the invention for a single-phase asynchronous motor for special purpose use, intended to reduce energy consumption;

Fig. 5 shows another circuit in accordance with the invention for operation of a single-phase asynchronous motor for special purpose use, intended to reduce energy consumption;

Fig. 6 shows a circuit in accordance with the invention for a three-phase asynchronous motor to reduce energy consumption;

Fig. 7 shows another circuit in accordance with the invention for a three-phase asynchronous motor to reduce energy consumption;

Fig. 8 shows a circuit in accordance with the invention for a single-phase asynchronous motor, providing an increased starting torque at the motor startup;

Fig. 9 shows a circuit in accordance with the invention for a single-phase asynchronous motor, having non-contact means to improve the starting torque; and

Fig. 10 shows circuit elements in the form of a chip in a circuit in accordance with the present invention for reducing energy consumption with single- and three-phase asynchronous motors.

The circuits here concerned generally include connections between a triac T1, a diac D1, a capacitor C1 and a resistor R1. From a point A a conductor is lead to the triac T1 and further to a point E. A branch conductor is lead from point A through the capacitor C1 to a point B. The triac T1 is entered by two connections, one from point A and the other one from point B through the diac D1. Point B is connected by a conductor through the resistor R1 to a point E. The connection with the above described connecting pattern is also disclosed in the aforementioned reference EP-A2-0 291 085. This reference also shows a connection between phases at points F and G ahead of point A, this connection including a capacitor C2. Points F and E are also interconnected by a second branch which includes a capacitor C3 and resistor R2. This branch is disclosed as an alternative in the aforementioned reference, depending on the application and installation need.

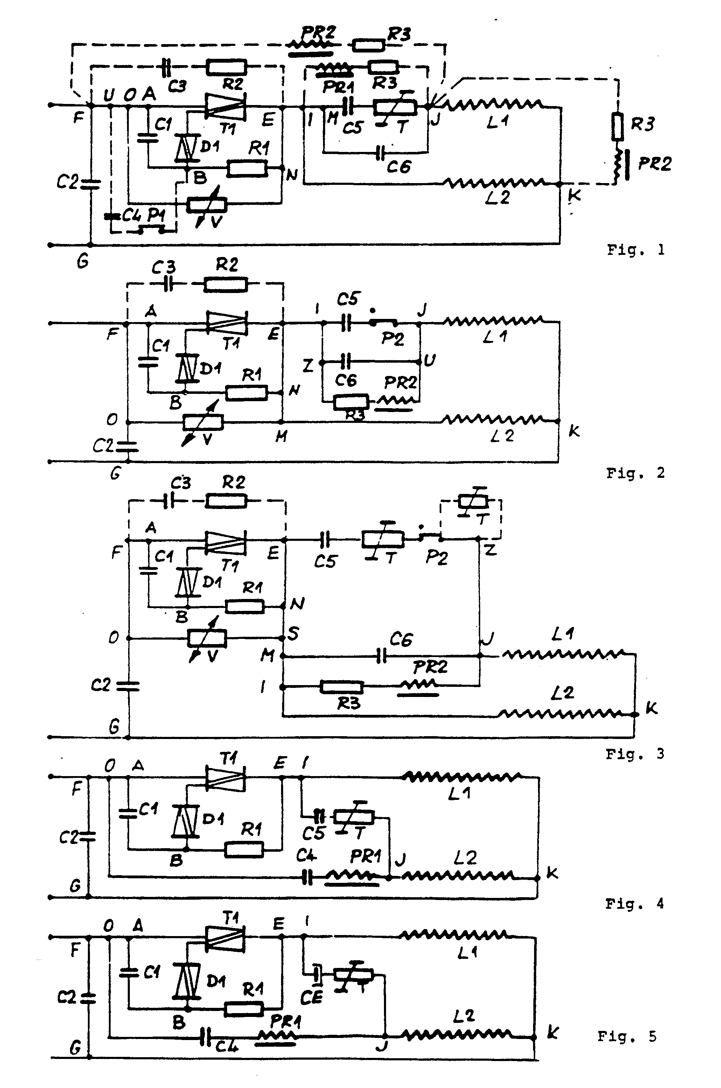

In the circuit to be used for a single-phase asynchronous motor with increased secondary torque, as shown in Fig. 1, between the points A and F from a point O a varistor V is connected to a point N between resistor R1 and point E.

Alternatively, between points F and O from a point U a capacitor C4 and circuit breaker PI are connected to point B. The circuit breaker PI may be replaced by an NTC resistor. A conductor from point E leads through points I and M to a capacitor C5 and a PCT thermistor T and further to a point J from where it proceeds to a motor coil L1 and through point K reaches point G. It is possible to replace the capacitor C5 by an electrolytic capacitor or completely eliminate it, depending on application and need. Between points M and J, in parallel with the capacitor C5 and PCT thermistor T, a capacitor C6 is connected. From point I a conductor encompassing a motor coil L2 is lead to point K. Also from point I another conductor branch including a choke coil PR1 and resistor R3 is alternatively lead to point J. Also alternatively, a relay PR2 and the resistor R3 are connected with the points F and J as well as with the points K and J.

In the circuit used for a single-phase asynchronous motor where the auxiliary phase inductivity actuates a switch, as shown in Fig. 2, the varistor V connects a point O between point F and capacitor C2 to a point M connected to point N. From point E a conductor is lead to point I and further through capacitor C5 and a circuit breaker P2 to point J and further through the motor coil L1 and point K to point G. The points M and K are linked by a conductor including the motor coil L2. Between the points I and J a parallel connection exists through a point Z, capacitor C6 and a point U. In parallel to this branch there is a series connection encompassing resistor R3 and relay PR2. Again the capacitor C5 may be replaced by an electrolytic capacitor.

In the circuit used for a single-phase asynchronous motor with increased secondary starting torque and the auxiliary phase inductivity actuating a switch, as shown in Fig. 3, from point E a conductor is lead through capacitor C5, PCT thermistor T and circuit breaker P2 to point 2, then to point J and further through the motor coil L1 and point K to point G. Alternatively, the PCT thermistor T can be placed between the circuit breaker P2 and point 2 instead of its installation between the capacitor C5 and circuit breaker P2. Between point F and capacitor C2 from point O the varistor V is connected to a point S and further to point N. From point S a conductor is lead to point M and through the capacitor C6 to point J. From point M a conductor is lead to point I and through resistor R3 and relay PR2 to point J. From point I a conductor is lead to the motor coil L2 and further to point K.

In the circuit used for a single-phase asynchronous motor for special purposes aimed at reduction of energy consumption, as shown in Fig. 4, a conductor is lead from point E to point I and further through the motor coil L1 and point K to point G. From point I a second conductor is lead through capacitor C5 and PCT thermistor T to point J and further through the motor coil L2 to point K. From point O between the points F and A a conductor is lead through capacitor C4 and choke coil PR1 to point J.

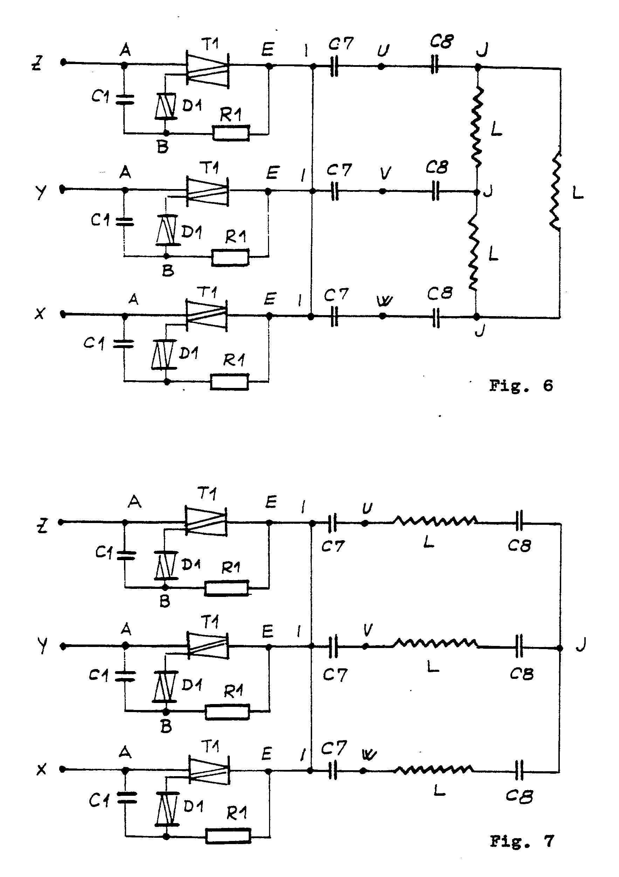

In the circuit used for a single-phase asynchronous motor for special purposes aimed at reduction in energy consumption, as shown in Fig. 5 a conductor is lead from point E to point I and further through the motor coil L1 and point K to point G. From point I a conductor is lead through an electrolytic capacitor CE and PCT thermistor T to point J and through motor coil L2 to point K. Between the points F and A from point O a conductor is lead through capacitor C4 and choke coil PR1 to point J.

In the circuit used for a three-phase asynchronous motor aimed at reduction of energy consumption, as shown in Fig. 6, from point E a conductor is lead to point 1 and further through a capacitor C7, point U and a capacitor C8 to point J and further through a motor coil L to the next point J, this type of connection occurring three times. The points I are interconnected.

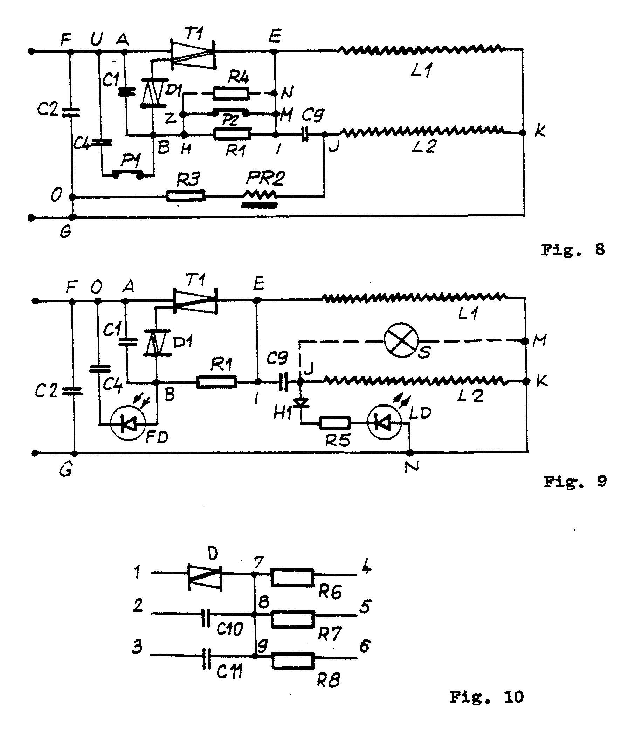

In the circuit used for a three-phase asynchronous motor aimed at reduction of energy consumption, as shown in Fig. 7, from point E a conductor is lead to point I and further through capacitor C7, point U, motor coil L and capacitor C8 to point J, this type of connection again occurring three times. Again the points I are interconnected.

In the circuit used for a single-phase asynchronous motor with increased starting torque at motor startup, as shown in Fig. 8, between points F and A from point U a conductor is lead through capacitor C4 and circuit breaker P1 to point 8. A circuit breaker P2 is connected from a point Z connected to a point H between point B and resistor R1 to a point M in connection with point E. Alternatively, from point Z a resistor R4 is connected to a point N between the points E and M. From point E a conductor is lead through the motor coil L1 to point K and further to point G. From point M a conductor is lead through point I, a capacitor C9, point J and motor coil L2 to point K. From point J a conductor is lead through relay PR2 and resistor R2 to a point O between capacitor C2 and point G.

In the circuit used for a single-phase asynchronous motor with non-contact provision of a starting torque avoiding a centrifugal starting switch, as shown in Fig. 9, from point E a conductor is lead through the motor coil L1, point M, point K and point N to point G. From point I a conductor is lead through capacitor C9 to point J and through motor coil L2 to point K. From point J a conductor is lead through a diode H1, resistor R5 and LED diode LD to point N. The LED diode LD can be any luminous element or inductive lamp or similar. Alternatively, it is possible to connect the points J and M by a lamp S. From point B a conductor is lead through a photodiode FD and capacitor C4 to a point O between the points F and A. the photodiode FD may be replaced by any element absorbing light, such as a photoresistor, a phototransistor, or the like.

In a circuit applied for single- and three-phase asynchronous motors for reduction of energy consumption which is in the form of a chip, as shown in Fig. 10, a diac D and resistor R6 are connected in series, likewise a capacitor C10 and resistor R7 and a capacitor C11 and resistor R8, while the connecting points 7, 8 and 9 between the diac D and resistor R6, the capacitor C10 and resistor R7 and the capacitor C11 and resistor R8, respectively, are interconnected.

## Claims

1. A circuit for reducing power consumption and improving performance of an asynchronous electric motor, the circuit comprising a triac (T1) in series with a motor coil (L), the control input of the triac (T1) being connected through a series connection of a capacitor (C1) and a diac (D1) to the input of the triac (T1) and through a series connection of a resistor (R1) and the same diac (D1) to the output of the triac (T1).

2. The circuit of claim 1 wherein a capacitor (C2) is connected across the input of the circuit.

3. The circuit of claim 1 or 2 wherein a capacitor (C3) in series with a resistor (R2) is connected in parallel to the triac (T1) (Figs. 1 to 3).

4. The circuit of one of the preceding claims wherin a varistor (V) is connected in parallel to the triac (T1) (Figs. 1 to 3).

5. The circuit of anyone of the claims 1 to 3 wherein a capacitor (C4) in series with a circuit breaker (P1/Figs. 1 and 8; FD/Fig. 9) or an NTC resistor is connected between the input of the triac (T1) and the input of the diac (D1) (Figs. 1, 8 and 9).

6. The circuit of anyone of the preceding claims wherein the triac (T1) is connected in series with, on the one hand, a capacitor (C5/Figs. 1 to 5; C9/Figs. 8 and 9) - which may be an electrolytic capacitor -, a first motor coil (L1/Figs. 1 to 3; L2/Figs. 4, 5, 8 and 9) and, facultatively, a PCT thermistor (T) and/or a circuit breaker (P2) and, on the other hand, with a second motor coil (L2/Figs. 1 to 3; L1/Figs. 4, 5, 8 and 9), the junction (K) of the two motor coils (L1, L2) being connected to the second input conductor of the circuit (Figs. 1 to 5, 8 and 9).

7. The circuit of claim 6 wherein a capacitor (C6) is connected in parallel to said capacitor (C5) in series with said PCT thermistor (T) and/or circuit breaker (P2) (Figs. 1 to 3).

8. The circuit of claim 6 or 7 wherein a relay (PR2) in series with a resistor (R3) is connected either
- across the first motor coil (L1/Fig. 1; L2/Fig. 8) or
- across said series connection of the triac (T1), capacitor (C5). PCT thermistor (T) and/or circuit breaker (P2) or
- said series connection alone of said capacitor (C5), PCT thermistor (T) and/or circuit breaker (P2) (Figs. 1 to 3 and 8).

9. The circuit of claim 6 or 7 wherein a choke coil (PR1) in series with a resistor (R3) is connected in parallel to said capacitor (C5) in series with said PCT thermistor (T) (Fig. 1).

10. The circuit of claim 6 or 7 wherein a choke coil (PR1) in series with a capacitor (C4) is connected in parallel to said series connection of the triac (T1), capacitor (C5) and PCT thermistor (T) (Figs. 4 and 5).

11. The circuit of anyone of the claims 1 to 5 wherein a circuit breaker (P2) and/or an additional resistor (R4) is connected in parallel to said resistor (R1) included in said series connection of a resistor (R1) and diac (D1).

12. The circuit of the claims 5 and 6 wherein said circuit breaker is a light absorbing element (FD) and wherein a lamp (S) or a series connection of a diode (H1), a resistor (R5) and a light emitting diode (LD) is connected in parallel to said first motor coil (L2/Fig. 9).

13. The circuit of claim 1 wherein said circuit is provided in each input conductor from a three-phase network and that each triac (T1) is connected in series with at least one capacitor (C7, C8) to at least one terminal of a motor coil (L) of a three-phase motor (Figs. 6 and 7).

14. The circuit of claim 13 wherein the output of each of said series connections is connected through terminals of a different pair of motor coils (L), the motor coils thus forming a delta connection (Fig. 6).

15. The circuit of claim 13 wherein the output of each of said series connections is connected to one terminal of another of said motor coils (L), the other terminals of said motor coils being connected through a capacitor (C8) each to a common circuit point (J) (Fig. 7).

16. A circuit in chip form wherein
- a diac (D) is connected in series with a resistor (R6),
- a capacitor (C10) is connected in series with another resistor (R7), and
- another capacitor (C11) is connected in series with still another resistor (R8),
these three series connections being interconnected (Fig. 10).

Fig. 1

Fig. 2

Fig. 3

Fig. 4

Fig. 5

Fig. 6

Fig. 7

Fig. 8

Fig. 9

Fig. 10

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| D,X | EP-A-291085 (R. VINKO)<br>* the whole document * | 1-3 | H02P1/42<br>H02P7/638 |
| D,A | | 6, 13-16 | |
| X | US-A-4276506 (H.A. LITTLE)<br>* column 3, lines 5 - 14; figure 1 * | 4 | |
| A | DE-A-3123350 (KAUTT & BUX KG)<br>* page 9, paragraph 3; figure 1 * | 5 | |
| A | EP-A-190066 (RONIC S.A.)<br>* column 3, lines 25 - 47; figure 1 * | 5 | |
| A | ELEKTRONIK.<br>vol. 34, no. 4, February 1985, MUNCHEN DE<br>pages 86 - 90; W FRANK:<br>"PHASENANSCHNITTSTEUERUNGEN - PROBLEMBEZOGEN"<br>* the whole document * | 1, 16 | |

TECHNICAL FIELDS
SEARCHED (Int. Cl.5 )

H02P
H02M

The present search report has been drawn up for all claims

| Place of search | Date of completion of the search | Examiner |
|---|---|---|
| THE HAGUE | 11 SEPTEMBER 1990 | BEYER F. |